## Europäisches Patentamt

## European Patent Office

## Office européen des brevets

(19)

(11) Veröffentlichungsnummer: **0 109 605**
**B1**

(12)

# EUROPÄISCHE PATENTSCHRIFT

(45) Veröffentlichungstag der Patentschrift:
**22.03.89**

(21) Anmeldenummer: **83111117.4**

(22) Anmeldetag: **08.11.83**

(51) Int. Cl.⁴: **C 08 G 18/65, C 08 G 18/50, C 08 G 18/32, C 08 G 18/14**

(54) Verfahren zur Herstellung von mikrozellularen oder geschäumten Formkörpern.

(30) Priorität: **20.11.82 DE 3242925**

(43) Veröffentlichungstag der Anmeldung:
**30.05.84 Patentblatt 84/22**

(45) Bekanntmachung des Hinweises auf die Patenterteilung:
**22.03.89 Patentblatt 89/12**

(84) Benannte Vertragsstaaten:
**BE DE FR GB IT SE**

(56) Entgegenhaltungen:
**EP-A- 0 017 928**
**BE-A- 681 430**
**FR-A- 2 121 556**
**US-A- 3 256 213**

(73) Patentinhaber: **BAYER AG, Konzernverwaltung RP Patentabteilung, D-5090 Leverkusen 1 Bayerwerk (DE)**

(72) Erfinder: **Schäfer, Walter, Dr., Wolfskaul 6, D-5000 Koeln 80 (DE)**
Erfinder: **Meiners, Hans-Joachim, Dr., Ringstrasse 25, D-5090 Leverkusen (DE)**
Erfinder: **Seel, Klaus, Dr., Märchenstrasse 72, D-5000 Koeln 80 (DE)**
Erfinder: **Reichmann, Wolfgang, Dr., Koeiner Strasse 48, D-4010 Hiiden (DE)**
Erfinder: **Wagner, Kuno, Dr., Am Kiesberg 8, D-5090 Leverkusen (DE)**
Erfinder: **Findeisen, Kurt, Dr., In der Folimühle 10, D-5068 Odenthai 2 (DE)**

## Beschreibung

Die vorliegende Erfindung betrifft ein verbessertes Einstufen-Verfahren zur Herstellung mikrozellularer oder geschäumter Formkörper mittels der Reaktionsspritzgußtechnik, wobei das in geschlossene Formen einzubringende Reaktionsgemisch auf Basis von organischen Polyisocyanaten und Verbindungen mit gegenüber Isocyanatgruppen reaktionsfähigen Gruppen als wesentliche Komponente bestimmte, nachstehend näher beschriebene Ammoniumcarbamatgruppen aufweisende Verbindungen enthält.

Die Herstellung von mikrozellularen oder geschäumten Formkörpern mit einer geschlossenen Oberflächenschicht nach dem Isocyanat-Polyadditionsverfahren ist grundsätzlich bekannt. Sie erfolgt z.B. durch Einführen einer reaktions- und schäumfähigen Mischung auf Basis von Verbindungen mit mehreren reaktionsfähigen Wasserstoffatomen und Polyisocyanaten in eine Form (vgl. z.B. die deutsche Auslegeschrift 1 196 864). Als Verbindungen mit reaktionsfähigen Wasserstoffatomen kommen dabei vor allem Hydroxylgruppen aufweisende Polyether in Frage, während als Beispiel für Polyisocyanate 2,4- und 2,6-Toluylendiisocyanat, deren Isomerengemische sowie das durch Anilin-Formaldehyd-Kondensation und anschließende Phosgenierung erhaltene Polyphenylpolymethylenpolyisocyanat zu nennen sind. Als Treibmittel werden z.B. Wasser und/oder Fluorkohlenwasserstoffe oder Azodiisobuttersäuredinitril eingesetzt. Als Katalysatoren, wie sie für die Polyurethanherstellung an sich bekannt sind, werden im allgemeinen mitverwendet.

Bei geeigneter Wahl der Ausgangskomponenten (zusätzlich können z.B. auch noch Kettenverlängerungsmittel wie Glykole oder Diamine mitverwendet werden) ist es nach dieser Verfahrensweise möglich, sowohl elastische als auch starre Produkte bzw. alle dazwischenliegenden Varianten herzustellen. Für hochbeanspruchte Formteile wählt man im allgemeinen schwach verzweigt aufgebaute Rohstoffe, die nach der Verarbeitung Materialien mit einem elastomerähnlichen Eigenschaftsbild ergeben.

Die Verarbeitung der Rohstoffe zu Karosserieteilen erfolgt dabei vor allem nach dem sogenannten Reaktionsspritzgußverfahren (RSG-Verfahren). Es handelt sich dabei um eine Fülltechnik, bei der die hochaktiven, flüssigen Ausgangskomponenten über Hochdruckdosieraggregate mit großer Austragsleistung nach Vermischen in sogenannten zwangsgesteuerten Mischköpfen in kürzester Zeit in die Form eingespritzt werden.

In der DE-OS 2 626 951 (US-PS 4 218 543) wird beschrieben, wie man selbst extrem reaktive Systeme, also one-shot-Gemische aus bei Raumtemperaturen flüssigen Di- oder Polyisocyanaten auf Basis von 4,4′-Diisocyanatdiphenylmethan, aktiven aromatischen Polyaminen, höhermolekularen Polyhydroxylverbindungen mit primären Hydroxylgruppen und starken Katalysatoren, mit Startzeiten bis herab zu weniger als einer Sekunde, nach dieser Methode verarbeiten kann. Bei solchen Systemen erfolgt der Übergang der flüssigen in die feste Phase nahezu schlagartig.

Die hohe Reaktivität dieser Systeme ermöglichte zwar erstmals die industrielle Serienproduktion von Polyurethan- bzw. Polyharnstoff-Formteilen bei Formstandzeiten von weniger als einer Minute, jedoch war das vorbekannte Verfahren auf die Herstellung von praktisch nicht geschäumten, massiven Formteilen beschränkt, da die bei der Herstellung von Formschaumstoffen auf Polyurethanbasis üblicherweise eingesetzten Treibmittel (Fluorkohlenwasserstoffe bzw. Wasser) ihre Treibwirkung zu langsam entfalten. Diese klassischen Treibmittel der Polyurethanchemie erwiesen sich als ungeeignet, hochreaktive Systeme der genannten Art in feinporige Formkörper einer um mehr als 20% herabgesetzten Dichte zu überführen. Beim Einsatz von Gasen wie Stickstoff oder Luft oder von niedrig siedenden Flüssigkeiten besteht andererseits das Problem der exakten Dosierung bzw. der Unmöglichkeit, derartige Treibmittel mit den Reaktionspartnern für die Polyisocyanate zu einer lagerstabilen Zweikomponente zu vereinigen.

Andererseits besteht nun in der Praxis das Bedürfnis, zwecks Reduzierung des Materialbedarfs bei der Herstellung der Formteile und zwecks Einsparung von Gewicht und damit Energie (beispielsweise bei Verwendung der Formteile als Bauteile im Automobil- und Flugzeugbau) den Vorteil der hochreaktiven Systeme einer extrem kurzen Formstandzeit mit dem Vorteil eines reduzierten Gewichts der Formteile zu kombinieren.

Ein Vorteil der in DE-OS 2 622 951 beschriebenen Systeme ist die Tatsache, daß für die Entformung aus geometrisch einfachen Plattenwerkzeugen kein externes Trennmittel als Trennhilfe angewandt zu werden braucht. Für eine Serienproduktion jedoch muß in regelmäßigen Abständen Trennmittel aufgetragen werden. Während dieser Zeit fällt das Werkzeug für die Produktion aus. Feine Gravierungen des Werkzeuges werden mit der Zeit von den Trennmittelresten überdeckt. Ein Entfernen dieser fest haftenden Rückstände in den häufig stark konturierten Werkzeugen ist nur mit großem Aufwand möglich. Die Kunststoffteile sind mit einem dünnen Trennfilm überzogen, auf dem Lacksysteme nicht haften. Die Teile müssen vor der Lackierung geschliffen oder mit Lösungsmitteln abgewaschen werden, um eine ausreichende Haftung des Lackes auf dem Kunststoff zu erzielen.

Die Mitverwendung von an sich für die Herstellung von selbsttrennenden Schaumstoff-Formkörpern auf Polyurethanbasis bekannten Formtrennmitteln (vgl. z.B. US-PS 3 726 952, GB-PS 1 365 215, US-PS 4 033 912, US-PS 4 024 090, US-PS 4 058 492, DE-OS 2 427 273, DE-OS 2 431 968, DE-OS 2 307 589, DE-OS 2 319 648 oder US-PS 4 076 695) in den speziellen Reaktionsgemischen gemäß DE-OS 2 622 951 führt im allgemeinen bestenfalls zu einer geringfügigen Verbesserung der selbsttrennenden Eigenschaften der nach der Reaktionsspritzgußtechnik hergestellten Elastomeren. Die Mitverwendung von saure Gruppen, insbesondere von Carboxylgruppen aufweisenden Trennmitteln in den Rezepturen gemäß DE-OS 2 622 951 ist außerdem mit dem Nachteil verbunden, daß die Katalyse der hochreaktiven Systeme gestört wird und Formkörper ohne Anfangsfestigkeit resultieren.

Es war daher die der Erfindung zugrundeliegende Aufgabe, ein neues Verfahren zur Herstellung von Formteilen auf Polyharnstoff-Basis zur Verfügung zu stellen, welche sich durch das gleichzeitige Vorliegen folgenden Vorteile auszeichnet:

1. Die Formstandzeiten sollten zwecks wirtschaftlicher Serienproduktion auf max. 300 Sekunden, vorzugsweise max. 180 Sekunden, begrenzbar sein.

2. Bei den Einzelkomponenten des, vorzugsweise zweikomponentig zu verarbeitenden, Systems sollte es sich um bei Raumtemperatur lagerstabile und unverändert transportfähige Gemische handeln;

3. das Verfahren sollte die Herstellung von mikrozellularen Formkörpern gestatten, deren Dichte ohne nennenswerte Beeinträchtigung der mechanischen Eigenschaften mindestens 10%, vorzugsweise 20 bis 40%, unter der Dichte eines entsprechenden, massiven Formkörpers liegt.

4. Das Verfahren sollte insbesondere auch die Herstellung von Formkörpern mit verbesserten Oberflächenqualitäten gestatten.

Diese Aufgabe konnte durch das nachstehend näher beschriebene erfindungsgemäße Verfahren gelöst werden.

Gegenstand der Erfindung ist ein Verfahren zur Herstellung von mikrozellularen oder geschäumten Formkörpern auf Polyharnstoff-Basis durch Umsetzung in geschlossenen Formen eines Reaktionsgemisches aus

a) einer Polyisocyanat-Komponente, bestehend aus mindestens einem Di- oder Polyisocyanat mit ausschließlich aromatisch gebundenen Isocyanatgruppen,

b) Verbindungen mit gegenüber Isocyanatgruppen reaktionsfähigen Gruppen, und

c) gegebenenfalls den in der Polyurethanchemie bekannten Hilfs- und Zusatzmitteln, wobei die Komponenten a) und b) als one-shot-System nach der Reaktionsspritzgußtechnik verarbeitet werden, dadurch gekennzeichnet, daß man als Komponente b) Gemische von

b1) mindestens drei aliphatische Ethergruppen sowie n aliphatisch gebundene, gegenüber Isocyanatgruppen reaktionsfähige Gruppen aufweisende Verbindungen, wobei n für eine ganze oder (im statistischen Mittel) gebrochene Zahl von 2 bis 4 steht,

(i) deren gegenüber Isocyanatgruppen reaktionsfähige Gruppen zu mindestens (100 : n) Prozent aliphatisch gebundene, primäre und/oder sekundäre Aminogruppen darstellen, die

(ii) ihrerseits zu mindestens 10% in Form von, im Sinne der Isocyanat-Additionsreaktion difunktionellen, Ammoniumcarbamatgruppen, wie sie durch Umsetzung von aliphatisch gebundenen, primären oder sekundären Aminogruppen mit Kohlendioxid entstehen, vorliegen, wobei

(iii) die unmodifizierten, Ethergruppen aufweisenden Verbindungen ein Molekulargewicht von 200 bis 10 000 aufweisen und wobei

(iv) die gegenüber Isocyanatgruppen reaktionsfähigen Gruppen, bezogen auf die Gesamtmenge aller Verbindungen b1) mit gegenüber Isocyanatgruppen reaktionsfähigen Gruppen, zu 0,2–100 Äquivalent-% Ammoniumcarbamatgruppen darstellen, gegebenenfalls

(b2) mindestens einer Ammoniumcarbamatfreien Verbindung des Molekulargewichtsbereichs 400–10 000 mit gegenüber Isocyanatgruppen reaktionsfähigen Gruppen, sowie

(b3) mindestens einem Ammoniumcarbamatfreien, im Sinne der Isocyanat-Polyadditionsreaktion mindestens difunktionellen Kettenverlängerungs- bzw. Vernetzungsmittel des Molekulargewichtsbereichs 60–400, ausgewählt aus der Gruppe bestehend aus

(i) Diaminen mit 2 primären und/oder sekundären aromatisch gebundenen Aminogruppen des Molekulargewichtsbereichs 108–400,

(ii) gegebenenfalls Ethergruppen und mindestens zwei gegenüber Isocyanatgruppen reaktionsfähige Gruppen aufweisenden Aminoalkoholen des Molekulargewichtsbereichs 61–400 und

(iii) aliphatischen Polyaminen mit mindestens 2 primären oder sekundären Aminogruppen des Molekulargewichtsbereichs 60–400 verwendet, wobei die Reaktionspartner in einem Gewichtsverhältnis von (b1)+b2)) : b3) von 1 : 1 bis 20 : 1 eingesetzt werden.

Erfindungswesentlich ist die Mitverwendung von Ammoniumcarbamatgruppen aufweisenden Polyethern als Teil der Komponente b). Die Herstellung von Ammoniumcarbamatgruppen aufweisenden Verbindungen durch Umsetzung von primären oder sekundären aliphatischen Aminen mit Kohlendioxid ist zwar im Prinzip bereits bekannt. So beschreibt beispielsweise die DE-OS 1 570 571 die Umsetzung von Aminogruppen aufweisenden Polyethern mit Kohlendioxid zu den entsprechenden Ammoniumcarbamaten, die bei der Herstellung von Schaumstoffen mit Epoxidverbindungen, Polyethern oder Polyestern abgemischt werden können. Irgendwelche Hinweise auf die Herstellungs von Polyurethan- bzw. Polyharnstoffschaumstoffen, geschweige denn auf die Herstellung von Formkörpern auf Polyharnstoffbasis nach dem RSG-Verfahren sind dieser Vorveröffentlichung jedoch nicht zu entnehmen.

Die DE-OS 2 132 102 beschreibt die Herstellung von Polyurethanschaumstoffen nach dem Prepolymerprinzip, wobei NCO-Gruppen aufweisende Prepolymere mit Anlagerungsprodukten von Kohlendioxid an niedermolekulare Polyamine zur Reaktion gebracht werden, ohne jeglichen Hinweis auf das erfindungsgemäße Verfahren. Im übrigen lehrt diese Vorveröffentlichung, daß Gemische aus NCO-Prepolymeren mit Kohlendioxid-Addukten an organische Amine lagerstabil sind und erst beim Erhitzen ausreagieren. Die Modifizierung von Aminopolyethern der Art der erfindungsgemäßen Komponente b1) mit Kohlendioxid wird in der Vorveröffentlichung überhaupt nicht angesprochen.

Die DE-OS 2 200 480 beschreibt die Herstellung von zellulären Polyurethanen durch Umsetzung von Polyisocyanaten mit Wasser, wobei neben dem Wasser insbesondere auch niedermolekulare Ammoniumcarbamate mitverwendet werden können. Auch diese Vorveröffentlichung steht in keinerlei Zusammenhang mit der Herstellung von Formkörpern der Art der erfindungsgemäß erhältlichen Verfahrensprodukte.

Die US-PS 3 635 908 befaßt sich mit der Herstellung von Polyurethanen aus (i) Polyisocyanaten, Polyhydroxylverbindungen bzw. hieraus hergestellten NCO-Prepolymeren und (ii) Ammoniumcarbamaten auf Basis von niedermolekularen Polyaminen und Kohlendioxid. Auch diese Vorveröffentlichung enthält keinerlei Hinweis auf die Herstellung von Formkörpern der Art der erfindungsgemäß erhältlichen Verfahrensprodukte und stellt ebenfalls die Stabilität von Gemischen von organischen Polyisocyanaten und Kohlendioxid-modifizierten Polyaminen bei niederen Temperaturen heraus, so daß die Durchführbarkeit des erfindungsgemäßen Verfahrens unter spontaner Freisetzung von Kohlendioxid und Einhalten von extrem kurzen Formstandzeiten nicht erwartet werden konnte.

Die US-PS 3 256 213 beschreibt zwar die Verwendung von Kohlendioxid-modifizierten Polyaminopolyethern bei der Herstellung von Schaumstoffen einer niedrigen Dichte durch Umsetzung mit organischen Polyisocyanaten, jedoch müssen die Kohlendioxid-modifizierten Aminopolyether durch Zusatz einer starken Base wie beispielsweise Kaliumoxid aktiviert werden, so daß die Durchführbarkeit des erfindungsgemäßen Verfahrens, wo es auf eine spontane Reaktion ohne Zusatz einer derartigen Base entscheidend ankommt, nicht erwartet werden konnte.

Obwohl aus den genannten Vorveröffentlichungen hervorgeht, daß Ammoniumcarbamatgruppen aufweisende Polyamine insbesondere bei höherer Temperatur Kohlendioxid abspalten und mit Isocyanaten reagieren, konnte nicht erwartet werden, daß die erfindungsgemäß als Reaktionskomponente b1) zu verwendenden bzw. mitzuverwendenden, Ammoniumcarbamatgruppen aufweisende Polyether zur Lösung der erfindungsgemäßen Aufgabe geeignet sein würden, nachdem andere Carbamate, z.B. das Umsetzungsprodukt von Hexamethylendiamin mit Kohlendioxid, welches in den vorgenannten Druckschriften bevorzugt eingesetzt wird, sich ebenso wie die oben aufgeführten klassischen Treibmittel zur Lösung der gestellten Aufgabe als zu reaktionsträge erwiesen.

Neben den erfindungswesentlichen Verbindungen b1) kommen bei der Durchführung des erfindungsgemäßen Verfahrens

a) eine Polyisocyanat-Komponente, bestehend aus mindestens einem Di- oder Polyisocyanat mit ausschließlich aromatisch gebundenen Isocyanatgruppen, gegebenenfalls

b2) mindestens eine Ammoniumcarbamatgruppen-freie Verbindung des Molekulargewichtsbereichs 400 bis 10 000 mit mindestens 2 gegenüber Isocyanatgruppen reaktionsfähigen Gruppen, sowie

b3) mindestens eines der nachstehend näher beschriebenen, im Sinne der Isocyanat-Polyadditionsreaktionen mindestens difunktionellen, Ammoniumcarbamatgruppe-freien, Aminogruppen aufweisenden Kettenverlängerungs- bzw. Vernetzungsmittel des Molekulargewichtsbereichs 60 bis 400, sowie gegebenenfalls

c) die in der Polyurethanchemie an sich bekannten Hilfs- und Zusatzmittel zum Einsatz.

Die Aufbaukomponenten b2) und b3) werden hierbei im Gemisch mit der erfindungswesentlichen Komponente b1) eingesetzt. Sie stellen daher Abmischkomponenten für diese Komponente b1) dar. Die Hilfs- und Zusatzmittel (c) können der Polyisocyanatkomponente a) und/oder der Komponente b) zugemischt werden. Vorzugsweise werden die Hilfs- und Zusatzmittel (c) der vereinigten Komponente b) zugemischt.

Bei der im erfindungsgemäßen Verfahren einzusetzenden Polyisocyanatkomponente a) handelt es sich um aromatische Di- und/oder Polyisocyanate, d.h. um solche, die ausschließlich aromatisch gebundene Isocyanatgruppen aufweisen. Beispiele für derartige Verbindungen sind 2,4- und 2,6-Diisocyanatotoluol, 2,2'-, 2,4'- und/oder 4,4'-Diisocyanatodiphenylmethan, Gemische dieser letztgenannten Isomeren mit ihren höheren Homologen, wie sie bei der bekannten Phosgenierung von Anilin/Formaldehyd-Kondensaten anfallen, Urethangruppen aufweisende Umsetzungsprodukte der genannten Di- und/oder Polyisocyanate mit unterschüssigen Mengen an aliphatischen Polyhydroxylverbindungen des Molekulargewichtsbereichs 62–700 wie z.B. Ethylenglykol, Trimethylpropan, Propylenglykol, Dipropylenglykol oder Polypropylenglykolen des genannten Molekulargewichtsbereichs, durch partielle Carbodiimidisierung der Isocyanatgruppen der genannten Di- und/oder Polyisocyanate modifizierte Di- und/oder Polyisocyanate, Methyl-substituierte Diisocyanate der Diphenylmethanreihe bzw. deren Gemische der beispielsweise in EP-OS 0 024 665 beschriebenen Art oder beliebige Gemische derartiger aromatischer Di- und Polyisocyanate.

Zu den bevorzugten Ausgangsmaterialien a) gehören die bei Raumtemperatur flüssigen Derivate des 4,4'-Diisocyanatodiphenylmethans, beispielsweise die Urethangruppen aufweisenden Polyisocyanate, die gemäß DE-PS 1 618 380 (US-PS 3 644 457) durch Umsetzung von 1 Mol 4,4'-Diisocyanatodiphenylmethan mit 0,05 bis 0,3 Mol an niedermolekularen Diolen oder Triolen, vorzugsweise Polypropylenglykolen mit einem unter 700 liegenden Molekulargewicht, zugänglich sind, oder Carbodiimid- und/oder Uretonimingruppen aufweisende Diisocyanate auf Basis von 4,4'-Diisocyanatodiphenylmethan, wie sie beispielsweise gemäß US-PS 3 152 162, US-PS 3 384 653, US-PS 3 449 256, DE-OS 2 537 685 oder EP-A 5233 zugänglich sind. Auch die entsprechenden Modifizierungsprodukte auf Basis von Gemischen aus 2,4'- und 4,4'-Diisocyanatodiphenylmethan oder auch Gemische der wie beschrieben modifizierten 4,4'-Diisocyanatodiphenylmethane mit untergeordneten Mengen an höher als difunktionellen Polyisocyanaten der Diphenylmethanreihe, beispielsweise solche der in DE-OS 2 624 526 beschriebenen Art, gehören zu den bevorzugten Polyisocyanaten. Im allgemeinen handelt es sich bei den bevorzugten, erfindungsgemäß einzusetzenden Polyisocyanaten um bei Raumtemperatur flüssige, gegebenenfalls wie beschrieben chemisch modifizierte Polyisocyanate bzw. Polyisocyanatgemische der Diphenylmethanreihe einer (mittleren) NCO-Funktionalität von 2 bis 2,5, vorzugsweise 2 bis 2,2 und insbesondere von 2, in denen als Hauptkomponente (mehr als 50 Gew.-%) 4,4'-Diisocyanatodiphenylmethan vorliegt. Beliebige Gemische der genannten Einzelkomponenten können ebenfalls eingesetzt werden.

Bei der erfindungswesentlichen Komponente b1) handelt es sich um Derivate von mindestens 3 aliphatische Ethergruppen aufweisenden, gegebenenfalls als Gemisch vorliegenden Verbindungen mit (im statistischen Mittel) 2 bis 4, vorzugsweise 2 bis 3, gegenüber Isocyanatgruppen reaktionsfähigen Gruppen eines, aus der Funktionalität und dem Gehalt an gegenüber Isocyanatgruppen reaktionsfähigen Gruppen berechenbaren (mittleren) Molekulargewichts von 200 bis 10 000, vorzugsweise 400 bis 10 000 und insbesondere 1000 bis 7000. In diesen «Derivaten» stellen (im statistischen Mittel) mindestens $(100 : n)$ Äquivalentprozent aller vorliegenden, gegenüber Isocyanatgruppen reaktionsfähigen Gruppen aliphatisch gebundene, primäre und/oder sekundäre Aminogruppen dar (n bezeichnet die Funktionalität der Verbindungen mit gegenüber Isocyanatgruppen reaktionsfähigen Gruppen im Sinne der Isocyanat-Additionsreaktion d.h. im Falle des Vorliegens von Gemischen von unterschiedlichen Verbindungen die mittlere Funktionalität des Gemischs und stellt eine ganze oder gebrochene Zahl von 2 bis 4, vorzugsweise 2 bis 3 dar). Vorzugsweise stellen mindestens 50%, oftmals 80–100% aller gegenüber Isocyanatgruppen reaktionsfähiger Gruppen derartige Aminogruppen dar.

Erfindungswesentlich ist nun, daß diese Aminogruppen zumindest teilweise, d.h. zu mindestens 10, vorzugsweise mindestens 20 und insbesondere mindestens 50 Äquivalentprozent als, im Sinne der Isocyanat-Additionsreaktion difunktionelle, Ammoniumcarbamatgruppen, die durch Umsetzung von aliphatisch gebundenen, primären oder sekundären Aminogruppen mit Kohlendioxid entstehen, vorliegen. Neben diesen Aminogruppen bzw. Ammoniumcarbamatgruppen können in der Komponente b1) insbesondere noch primäre oder sekundäre, aliphatisch gebundene Hydroxylgruppen vorliegen.

Besonders bevorzugt als Komponente b1) sind solche Polyether bzw. Polyethergemische, deren gegenüber Isocyanatgruppen reaktionsfähige Gruppen sich zu

(i) 0 bis 50 Äquivalentprozent, vorzugsweise 0 bis 30 Äquivalentprozent, aus primären oder sekundären, aliphatisch gebundenen Hydroxylgruppen, zu

(ii) 0 bis 90 Äquivalentprozent, vorzugsweise 5 bis 80 Äquivalentprozent, aus primären oder sekundären, aliphatisch gebundenen Aminogruppen und zu

(iii) 10 bis 100 Äquivalentprozent, vorzugsweise 20 bis 95 Äquivalentprozent, aus, im Sinne der Isocyanat-Polyadditionsreaktion difunktionellen, Ammoniumcarbamatgruppen, wie sie durch Umsetzung von aliphatisch gebundenen, primären oder sekundären Aminogruppen mit Kohlendioxid entstehen,

zusammensetzen, wobei sich die prozentualen Anteile der Einzelkomponenten (i)–(iii) jeweils zu 100 ergänzen. Unter «primären» bzw. «sekundären» Hydroxylgruppen sind in obigem Zusammenhang alkoholische, an primäre bzw. sekundäre Kohlenstoffatome gebundene Hydroxylgruppen zu verstehen, während die Bezeichnungen «primär» bzw. «sekundär» bezüglich der Aminogruppen sich auf diese selbst und nicht auf das mit dem Aminstickstoff verbundene Kohlenstoffatom beziehen. Primäre Aminogruppen sind gegenüber den sekundären Aminogruppen bevorzugt.

Die erfindungswesentliche Komponente b1) kann durch geeignete Modifizierung der aus der Polyurethanchemie an sich bekannten Polyhydroxypolyether erhalten werden. Unter «Modifizierung» von Polyhydroxypolyethern ist in diesem Zusammenhang deren zumindest teilweise Überführung in «Aminopolyether» und deren anschließende zumindest teilweise Umsetzung mit Kohlendioxid zu Ammoniumcarbamatgruppen aufweisenden Polyethern zu verstehen. Die Herstellung der «Aminopolyether», d.h. die teilweise Überführung der Hydroxylgruppen der an sich bekannten Polyhydroxypolyether in (vorzugsweise primäre) Aminogruppen, entweder durch Ersatz der Hydroxylgruppen durch Aminogruppen oder durch Umsetzung der Hydroxylgruppen mit Aminogruppen oder in Aminogruppen überführbare Gruppen aufweisenden Reaktionspartnern, erfolgt in an sich bekannter Weise. So kann beispielsweise eine Aminierung von Polyhydroxylpolyethern wie z.B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer- oder Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Polyoxalkylen(Polyether)-aminen sind in US-PS 3 155 728, US-PS 3 236 895 und FR-PS 1 551 065 beschrieben. In der FR-PS 1 466 707 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Durch Umsetzung von NCO-Prepolymeren auf Basis von Polyhydroxypolyethern mit Hydroxylgruppen aufweisenden Enaminen, Aldiminen oder Ketiminen und anschließende Hydrolyse erhält man gemäß DE-OS 2 546 536 bzw. US-PS 3 865 791 höhermolekulare, endständige Aminogruppen aufweisende Verbindungen.

Nach DE-OS 2 948 419 werden Aminopolyether durch Hydrolyse von endständige Isocyanatgruppen aufweisenden Verbindungen erhalten. Bei diesem Verfahren werden vorzugsweise zwei oder drei Hydroxylgruppen aufweisende Polyether mit Polyisocyanaten zu NCO-Prepolymeren umgesetzt und in einem zweiten Schritt die Isocyanatgruppe durch Hydrolyse in eine Aminogruppe überführt.

Wie dargelegt, sind nach den unterschiedlichsten Methoden «Aminopolyether» mit aliphatisch oder mit aromatisch gebundenen Aminogruppen zugänglich. Für die weitere Modifizierung durch Umsetzung mit Kohlendioxid werden jedoch ausschließlich aliphatisch gebundene Aminogruppen aufweisende Aminopolyether eingesetzt. Die aromatisch gebundene Aminogruppen aufweisenden Polyether können jedoch gegebenenfalls in der Komponente b2) als Abmischkomponente vorliegen. Die Einführung von Ammoniumcarbamatgruppen erfolgt durch Umsetzung der, primäre und/oder sekundäre Aminogruppen enthaltenden Polyether mit Kohlendioxid unter Druck oder auch drucklos, wobei pro Mol Kohlendioxid 2 Mol Aminogruppen in Reaktion treten (s. z.B. Journal of the American Chemical Society 73, 1829 (1951)). Demzufolge entstehen aus einem Mol Ammoniumcarbamatgruppen nach Abspaltung des reversibel angelagerten Kohlendioxids 2 Aminogruppen, so daß die Ammoniumcarbamatgruppen bei allen stöchiometrischen Berechnungen als im Sinne der Isocyanat-Additionsreaktion difunktionelle Gruppen zu verstehen sind.

Für das erfindungsgemäße Verfahren sind als Komponente b1) sowohl ausschließlich Ammoniumcarbamatgruppen aufweisende Polyether, d.h. vollständig entsprechend den obigen Ausführungen modifizierte Polyhydroxypolyether als auch unvollständig modifizierte Polyhydroxypolyether, welche neben den Ammoniumcarbamatgruppen Amino- und/oder Hydroxylgruppen aufweisen, geeignet. Die Komponente b1) weist eine (mittlere) Funktionalität im Sinne der Isocyanat-Additionsreaktion von 2 bis 4, vorzugsweise 2 bis 3, auf, wobei in die Berechnung der Funktionalität der Ammoniumcarbamatgruppen aufweisenden Polyether die Funktionalität der diesen zugrundeliegenden Aminopolyether eingeht. Damit wird auch klar, daß bei allen Betrachtungen bezüglich des Molekulargewichts der Komponente b1) die ionische «Kettenverlängerung» unberücksichtigt bleibt, die auf eine Bildung von Ammoniumcarbamatgruppen bei der Reaktion von Aminopolyethern mit Kohlendioxid zurückzuführen ist.

Bei der gegebenenfalls mitzuverwendenden Komponente b2) handelt es sich im allgemeinen um die aus der Polyurethanchemie bekannten Polyesterpolyole eines osmotisch bestimmbaren (mittleren) Molekulargewicht von 400 bis 10 000, vorzugsweise 1000 bis 7000 und insbesondere 2000 bis 6000, vorzugsweise jedoch um die aus der Polyurethanchemie bekannten Polyetherpolyole eines aus der Funktionalität und dem Gehalt an funktionellen Gruppen berechenbaren Molekulargewicht von 400 bis 10 000, vorzugsweise 1000 bis 7000 und insbesondere 2000 bis 6000, bzw. um Gemische derartiger Verbindungen mit einem mittleren Molekulargewicht innerhalb der genannten Bereiche.

Geeignete Polyesterpolyole sind die bekannten Veresterungsprodukte niedermolekularer, mehrwertiger Alkohole wie z.B. Ethylenglykol, 1,2-Dihydroxy-propan, 1,3-Dihydroxy-propan, 1,2-Dihydroxy-butan, 1,4-Dihydroxy-butan, 1,6-Dihydroxyhexan, Neopentylglykol, Glycerin oder Trimethylolpropan mit unterschüssigen Mengen an mindestens zweibasischen Säuren bzw. deren Anhydriden wie z.B. Adipinsäure, Phthalsäure oder Hexahydrophthalsäure bzw. den Anhydriden der letztgenannten Säuren.

Geeignete Polyetherpolyole sind beispielsweise die Verbindungen, die bereits oben beispielhaft im Zusammenhang mit der Herstellung der erfindungswesentlichen Komponente b1) genannt worden sind, wobei hier jedoch nur solche Polyetherpolyole eines Molekulargewichts von mindestens 400 in Betracht kommen. Grundsätzlich ist es auch möglich, als Abmischkomponente b2) für die erfindungswesentlichen Verbindungen b1) solche Polyester bzw. Polyether einzusetzen, deren Hydroxylgruppen ganz oder teilweise nach einem der oben beispielhaft genannten Verfahren in Aminogruppen überführt worden sind. Vorzugsweise werden jedoch die genannten Hydroxylgruppen aufweisenden Verbindungen als Komponente b2) verwendet. Die Komponente b2) weist im allgemeinen eine (mittlere) Funktionalität im Sinne der Isocyanat-Additionsreaktion von 2 bis 4, vorzugsweise 2 bis 3, auf.

Bei der im erfindungsgemäßen Verfahren mitzuverwendenden Komponente b3) handelt es sich um Verbindungen bzw. Gemische von Verbindungen, die ein Molekulargewicht von 60 bis 400 aufweisen, und die mindestens 2 gegenüber Isocyanatgruppen reaktionsfähige Gruppen tragen. Diese Kettenverlängerungs- bzw. Vernetzungsmittel stellen Verbindungen oder Gemische von Verbindungen dar, die aus der Gruppe bestehend aus (i) aromatischen Diaminen des Molekulargewichtsbereichs 108 bis 400, (ii) gegebenenfalls Ethergruppen aufweisenden Aminoalkoholen des Molekulargewichtsbereichs 61 bis 400 und (iii) aliphatischen Polyaminen des Molekulargewichtsbereichs 60 bis 400 ausgewählt sind, und die gegebenenfalls zusammen mit (iv) gegebenenfalls Ethergruppen aufweisenden, mindestens zweiwertigen, primären oder sekundären Alkoholen des Molekulargewichtsbereichs 62–400 zum Einsatz gelangen.

Geeignete aromatische Diamine (i) sind beliebige aromatische Verbindungen des genannten Molekulargewichtsbereichs, die 2 primäre und/oder sekundäre, aromatisch gebundene Aminogruppen aufweisen. Bevorzugte aromatische Diamine (i) sind solche, die zumindest in jeweils einer ortho-Stellung zu den Aminogruppen einen Alkylsubstituenten aufweisen, insbesondere solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen, aufweisen, besonders bevorzugt solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele geeigneter, bzw. bevorzugt geeigneter Diamine sind
2,4- und/oder 2,6-Diamino-toluol,
4,4'-Diaminodiphenylmethan,
2,4-Diaminomesitylen,
1,3,5-Triethyl-2,4-diaminobenzol,
1,3,5-Triisopropyl-2,4-diaminobenzol,
1-Methyl-3,5-diethyl-2,4-diaminobenzol,
1-Methyl-3,5-diethyl-2,6-diaminobenzol,
4,6-Dimethyl-2-ethyl-1,3-diaminobenzol,
3,5,3',5'-Tetraethyl-4,4'-diamino
    diphenylmethan,
3,5,3',5'-Tetraisopropyl-4,4'-diamino
    diphenylmethan oder
3,5-Diethyl-3',5'-diisopropyl-4,4'-
    diaminodiphenylmethan.

Selbstverständlich können die genannten aromatischen Diamine auch im Gemisch angewendet werden. Besonders bevorzugt sind in diesem Zusammenhang 1-Methyl-3,5-diethyl-2,4-diaminobenzol oder eine Mischung aus diesem mit 1-Methyl-3,5-diethyl-2,6-diaminobenzol.

Geeignete Aminoalkohole (ii) sind einfache Aminoalkohole wie Aminoethanol, Aminopropanol, Diethanolamin, Triethanolamin oder auch niedermolekulare Alkoxylierungsprodukte von mindestens 2 N–H-Bindungen aufweisenden aminischen Startermolekülen wie z. B. die, gegebenenfalls Etherbrücken aufweisenden, Ethoxylierungs- bzw. Propoxylierungsprodukte von Ammoniak, Ethylendiamin oder Hexamethylendiamin.

Geeignete aliphatische Amine (iii) sind insbesondere einfache aliphatische Diamine mit primären Aminogruppen wie z. B. Ethylendiamin, 1,3-Diaminopropan, Hexamethylendiamin oder 1,2-Diaminopropan.

Geeignete niedermolekulare, mehrwertige Alkohole (iv) sind beispielsweise Ethylenglykol, 1,2- bzw. 1,3-Dihydroxypropan, 1,4-Dihydroxybutan, 1,6-Dihydroxyhexan, Trimethylolpropan, Glycerin, Pentaerythrit oder auch niedermolekulare, Ethergruppen aufweisende Polyole wie Diethylenglykol, Triethylenglykol oder Dipropylenglykol.

Die beispielhaft genannten aromatischen Diamine (i), gegebenenfalls im Gemisch mit einfachen Alkoholen der unter (iv) beispielhaft genannten Art, insbesondere mit Ethylenglykol oder Butandiol-1,4, stellen die erfindungsgemäß bevorzugten Kettenverlängerungsmittel dar.

Die Komponente b3) kommt beim erfindungsgemäßen Verfahren in einem Gewichtsverhältnis von [(b1 + b2)] : b3) von 1 : 1 bis 20 : 1, vorzugsweise von 1,5 : 1 bis 10 : 1 und insbesondere von 2,5 : 1 bis 8 : 1 zum Einsatz, wobei die gegebenenfalls einen Bestandteil der Komponente b3) bildende Komponente (iv) mit in die Berechnung eingeht. Im übrigen muß darauf geachtet werden, daß die Art und Mengenverhältnisse der Komponente b1) bis b3) so gewählt werden, daß die gegenüber Isocyanatgruppen reaktionsfähigen Gruppen der gesamten Komponente b) zu mindestens 0,2, vorzugsweise 2–50 und insbesondere 10–40 Äquivalentprozent Ammoniumcarbamatgruppen darstellen.

Erfindungsgemäß geeignete Hilfs- und Zusatzmittel c) sind beispielsweise die sogenannten inneren Trennmittel des Standes der Technik. Bevorzugt sind innere Formtrennmittel, wie sie beispielsweise in DE-OS 1 953 637 (= US-PS 3 726 952), DE-OS 2 121 670 (= GB-PS 1 365 215), DE-OS 2 431 968 (= US-PS 4 098 731) bzw. in DE-OS 2 404 310 (= US-PS 4 058 492) beschrieben sind. Zu den bevorzugten Trennmitteln gehören die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen, gesättigte und/oder ungesättigte COOH- und/oder OH-Gruppen aufweisende Ester von mono- und/oder polyfunktionellen Carbonsäuren und polyfunktionellen Alkoholen mit Hydroxyl- oder Säurezahlen von mindestens 5, esterartige Umsetzungsprodukte aus Ricinolsäure und langkettigen Fettsäuren, Polyricinolsäuren, Salze aus Carbonsäuren und tertiären Aminen sowie natürliche und/oder synthetische Öle, Fette oder Wachse.

Besonders bevorzugt ist das Ölsäure- oder Tallölfettsäuresalz des amidgruppenhaltigen Amins, das durch Umsetzung von N-Dimethylaminopropylamin mit Ölsäure oder Tallölfettsäure erhalten worden ist.

Neben diesen beispielhaft genannten, bevorzugt einzusetzenden Trennmitteln können prinzipiell beim erfindungsgemäßen Verfahren auch andere an sich bekannte Trennmittel des Standes der Technik allein oder im Gemisch mit den bevorzugten, beispielhaft genannten Trennmitteln eingesetzt werden. Zu diesen weiterhin geeigneten Trennmitteln gehören beispielsweise die Umsetzungsprodukte aus Fettsäureestern und Polyisocyanaten gemäß DE-OS 2 319 648, die Umsetzungsprodukte aus reaktionsfähige Wasserstoffatome aufweisenden Polysiloxanen mit Mono- und/oder Polyisocyanaten gemäß DE-OS 2 356 692 (= US-PS 4 033 912), Ester von Hydroxymethylgruppen aufweisenden Polysiloxanen mit Mono- und/oder Polycarbonsäuren gemäß DE-OS 2 363 452 (= US-PS 4 024 090) und Salze aus Aminogruppen enthaltenden Polysiloxanen und Fettsäuren gemäss DE-OS 2 427 273 oder DE-OS 2 431 968 (US-PS 4 098 731).

Die genannten inneren Formtrennmittel werden, falls überhaupt, in einer Menge von insgesamt 0,1 bis 25 Gew.-%, vorzugsweise 1 bis 10 Gew.-%, bezogen auf das gesamte Reaktionsgemisch, eingesetzt.

Obwohl für die Herstellung der Formkörper aus den Komponenten a) und b) insbesondere bei Verwendung von hochreaktiven Hydroxylgruppen-freien Komponenten b) und darüber hinaus bei Einsatz der bevorzugten Formtrennmittel c) keine Katalysatoren für die Reaktion zwischen Isocyanat- und gegenüber Isocyanatgruppen reaktionsfähigen Gruppen eingesetzt werden müssen, können die Katalysatoren, die in bekannter Weise bei der Herstellung von Polyurethanschaumstoffen und mikrozellularen Elastomeren eingesetzt werden, als weitere Hilfs- bzw. Zusatzmittel c) mitverwendet werden.

Als mitzuverwendende Katalysatoren kommen tertiäre Amine der an sich bekannten Art in Frage, z.B.:
Triethylamin, Tributylamin,
N-Methyl-morpholin, N-Ethyl-morpholin,
N-Cocomorpholin,
N,N,N',N'-Tetramethyl-ethylendiamin,
1,4-Diazabicyclo-(2,2,2)-octan,
N-Methyl-N'-dimethylaminoethylpiperazin,
N,N-Dimethylbenzylamin,
Bis-(N,N-diethylaminoethyl)-adipat,
N,N-Diethylbenzylamin,
Pentamethyldiethylentriamin,
N,N-Dimethylcyclohexylamin,
N,N,N',N'-Tetramethyl-1,3-butandiamin,
N,N-Dimethylimidazol-β-phenylethylamin,
1,2-Dimethylimidazol und 2-Methyl-imidazol.

Auch organische Metallkatalysatoren, insbesondere organische Zinnkatalysatoren, wie z.B. Zinn-(II)-salze von Carbonsäuren wie Zinn-(II)-acetat, Zinn-(II)-octoat, Zinn-(II)-ethylhexoat und Zinn-(II)-laurat und die Dialkyl-zinnsalze von Carbonsäuren, wie z.B. Dibutylzinndiacetat, Dibutyl-zinndilaurat, Dibutyl-zinnmaleat oder Dioctyl-zinndiacetat können allein oder in Kombination mit den tertiären Aminen verwendet werden. Weitere Vertreter von Katalysatoren sowie Einzelheiten über die Wirkungsweise der Katalysatoren sind im Kunststoff-Handbuch, Band VII, herausgegeben von Vieweg & Höchtlen, Carl-Hanser-Verlag, München 1966, z.B. auf den Seiten 96 bis 102 beschrieben.

Die Katalysatoren werden, falls überhaupt, in einer Menge von etwa 0,001 und 10 Gew.-%, vorzugsweise 0,05 bis 1 Gew.-%, bezogen auf die Komponente b), eingesetzt.

Beim erfindungsgemäßen Verfahren können auch zusätzlich noch Treibmittel als weitere Komponente c) eingesetzt werden.

So können zusätzlich als Treibmittel Wasser (welches gleichzeitig partiell die Rolle eines Kettenverlängerungsmittels b3) übernehmen könnte) und/oder leicht flüchtige organische Substanzen und/oder gelöste inerte Gase verwendet werden.

Als organische Treibmittel kommen z.B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlortrifluormethan, Dichlordifluormethan, ferner Butan, Hexan, Heptan oder Diethylether in Frage.

Geeignete inerte Gase sind z.B. Stickstoff oder Luft.

Eine zusätzliche Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510, beschrieben. Vorzugsweise wird das erfindungsgemäße Verfahren jedoch ohne Mitverwendung der beispielhaft genannten klassischen Treibmittel der Polyurethanschaumchemie durchgeführt.

Erfindungsgemäß können auch oberflächenaktive Zusatzstoffe als weitere Komponente c) (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diethylamin oder starinsaures Diethanolamin in Frage. Auch Alkali- oder Ammoniumsalze von Sulfonsäuren wie etwa von Dodecylbenzolsulfonsäuren oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Als weitere Hilfs- und Zusatzmittel, die gegebenenfalls beim erfindungsgemäßen Verfahren mitverwendet werden, seien auch Zellregler der an sich bekannten Art, wie z.B. Paraffine oder Fettalkohole oder Dimethylpolysiloxane, sowie Pigmente oder Farbstoffe und Flammschutzmittel der an sich bekannten Art, z.B. Trischlor-ethylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Glasfaser, Kieselgur oder Schlämmkreide genannt. Als Füllstoff besonders bevorzugt werden Glasfasern.

Weitere Beispiele von gegebenenfalls erfindungsgemäß mitzuverwendenden oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Bei der Durchführung des erfindungsgemäßen Verfahrens wird die Menge der Komponente a) (Polyisocyanatkomponente) vorzugsweise so bemessen, daß im schaumfähigen Gemisch eine Isocyanat-Kennzahl von 70 bis 130, insbesondere 90 bis 110, vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100. In die Berechnung der Isocyanat-Kennzahl gehen hierbei die gegebenenfalls in den Trennmitteln vorliegenden, gegenüber Isocyanatgruppen reaktionsfähigen Gruppen (Carboxylgruppen) nicht ein. Die Ammoniumcarbamatgruppen gehen in die Berechnung der Isocyanat-Kennzahl als difunktionelle Gruppe ein. Bei der Durchführung des erfindungsgemäßen Verfahrens wird nach der bekannten Reaktionsspritzgußtechnik (RSG-Verfahren) gearbeitet. Hierbei kommen im allgemeinen zwei Reaktionskomponenten zum Einsatz, wobei die Polyisocyanatkomponente a) die erste und die «Polyamin-Komponente», d.h. die sich aus den Komponenten b1) und b3) sowie gegebenenfalls der Komponente b2) zusammensetzende Komponente b) die zweite Reaktionskomponente darstellen. Die gegebenenfalls mitzuverwendenden Komponenten c) werden im allgemeinen der «Polyamin-Komponente» zugemischt, jedoch kann es auch zweckmäßig sein, beispielsweise bei der Verwendung von Isocyanatgruppen aufweisenden Trennmitteln, diese vor der Durchführung des erfindungsgemäßen Verfahrens der Polyisocyanatkomponente a) einzuverleiben. Grundsätzlich ist es selbstverständlich auch möglich, solche Mischköpfe zu verwenden, die den Einsatz von drei oder vier getrennten Komponenten bei der Durchführung des erfindungsgemäßen Verfahrens gestatten, so daß eine Vormischung der Einzelkomponenten nicht erforderlich ist. Die Menge des in die Form eingebrachten, gegebenenfalls schäumfähigen Gemischs wird im übrigen vorzugsweise so bemessen, daß die Formkörper eine Gesamtrohdichte von 0,6–1,1 g/cm$^3$, aufweisen. Insbesondere bei der Mitverwendung von mineralischen Füllstoffen können Formkörper mit einer über 1,0 g/cm$^3$ liegenden Dichte resultieren. Die im allgemeinen eine homogene, weitgehend fehlerlose Oberfläche aufweisenden Formkörper können im allgemeinen nach einer Formstandzeit von 20 bis 300, vorzugsweise 60 bis 240 Sekunden entformt werden.

Als Ausgangstemperatur des in die Form eingebrachten Gemischs wird im allgemeinen eine Temperatur zwischen 10 und 60 °C, vorzugsweise 20 bis 50 °C, gewählt. Die Temperatur der Form beträgt im allgemeinen 40 bis 100 °C, vorzugsweise 50 bis 70 °C.

Die nach dem erfindungsgemäßen Verfahren erhältlichen Formkörper eignen sich insbesondere zur Herstellung von flexiblen Karosserielementen.

Durch geeignete Variation der Ausgangsverbindungen a) bis c), insbesondere bei relativ geringem Anteil an Diamin b3), können aber z.B. auch flexible Schuhsohlen mit gutem Abriebverhalten und ausgezeichneter mechanischer Festigkeit erhalten werden. Das erfindungsgemäße Verfahren eignet sich jedoch auch bei geeigneter Wahl der Ausgangsverbindungen und deren Mengenverhältnisse zur Herstellung von harten mikrozellularen Formkörpern des o.g. Dichtebereichs.

Bei der Herstellung von geschäumten Formkunststoffen mit Hilfe von konventionellen Treibmitteln wie zum Beispiel Trichlorfluormethan bilden sich oftmals sogenannte Liegezonenmarkierungen, da das Material nicht sofort anfängt zu schäumen. Außerdem führt eine oft nur begrenzte Verträglichkeit zur Bildung von Schlieren an der Oberfläche der Formkörper. Überraschenderweise treten beide Phänomene bei Mitverwendung der erfindungswesentlichen, Ammoniumcarbamatgruppen aufweisenden Verbindungen nicht auf.

Reaktionsgemische der erfindungsgemäß einzusetzenden Art können auch zur Herstellung von beliebigen, frei verschäumten Schaumstoffen eingesetzt werden. So eignen sich die schaumfähigen Gemische beispielsweise auch zur Beschichtung von Stegen und von Profilen.

Beispiele

Die Verarbeitung der in den folgenden Beispielen beschriebenen Rezepturen erfolgte mit Hilfe der Reaktionsspritzgußtechnik oder englisch «reaction injection moulding» (RIM).

Die Polyisocyanatkomponente und die, alle übrigen Bestandteile enthaltende, Gegenkomponente wurden einem Hochdruckdosieraggregat zugeführt und nach intensiver Vermischung in einem zwangsgesteuerten Mischkopf in kürzester Zeit in ein 60 °C heißes Metallwerkzeug gedrückt.

Die Werkzeuge – Kastenformen aus Aluminium – erlauben die Herstellung von Formteilen der Abmessung 4 × 120 × 400 mm (Beispiele 1–6) bzw. 10 × 200 × 200 mm (Beispiele 7–13). Die Forminnenwände wurden in den Beispielen 3–13 mit einem handelsüblichen Trennmittel auf Wachsbasis (Acmosil® 180 der Fa. Acmos Chem. Fabrik Tietjen & Co., Bremen) besprüht.

Beispiel 1

Ein Aminopolyether (Aminopolyether A) des mittleren Molekulargewichts 2000, der durch Umsetzung des Additionsproduktes von Propylenoxid an Propylenglykol mit Ammoniak in Gegenwart von Raney-Nickel und Wasserstoff hergestellt worden war, und dessen gegenüber Isocyanatgruppen reaktionsfähige Endgruppen zu mehr als 99 Äquivalentprozent aus primären Aminogruppen und zu weniger als 1 Äquivalentprozent aus sekundären Hydroxylgruppen bestehen, wird durch Reaktion mit Kohlendioxid so modifiziert, daß die gegenüber Isocyanatgruppen reaktionsfähigen Gruppen zu 53 Äquivalentprozent aus Ammoniumcarbamatgruppen bestehen.

55 Gew.-Teile des so modifizierten Polyethers werden mit 18,3 Gew.-Teilen eines Polyethers der OH-Zahl 28, der durch Addition von Propylenoxid und anschließende Addition von Ethylenoxid an Trimethylolpropan erhalten wurde, 22 Gew.-Teilen einer Mischung aus 65 Gew.-Teilen
1-Methyl-3,5-diethyl-phenylendiamin-(2,4)
und 35 Teilen
1-Methyl-3,5-diethyl-phenylendiamin-(2,6),
0,14 Gew.-Teilen Dibutylzinndilaurat,
0,1 Gew.-Teilen
1,4-Diazabicyclo-(2,2,2)-octan
und 4,5 Gew.-Teilen des stöchiometrischen Tallölfettsäuresalzes aus einem Mol Tallölfettsäure und einem Mol Amidamin, hergestellt aus einem Mol 3-Dimethylamino-propylamin-1 und einem Mol Tallölfettsäure, zu einer «Polyaminkomponente» vereinigt, dann werden noch 40 Gew.-Teile einer gemahlenen Glasfaser der mittleren Länge von 0,2 mm zugegeben, und das Ganze wird mit 60,5 Gew.-Teilen eines Umsetzungsproduktes aus Tripropylenglykol und 4,4'-Diphenylmethandiisocyanat (23 Gew.-% NCO) nach dem RSG-Verfahren verarbeitet (NCO-Kennzahl: 106).

Die Temperatur der Rohstoffe beträgt 40 °C. Die Formstandzeit beträgt 1 Minute.

Der PUR-Formteil hat eine Rohdichte (DIN 53 420) von 1070 kg/m³. Weitere charakteristische Werte sind:

| | |
|---|---|
| Zugfestigkeit (DIN 53 504) | 28 MPa |
| Bruchdehnung (DIN 53 504) | 285% |
| Weiterreißfestigkeit (DIN 53 515) | |
| im Schnitt | 84 kN/m |
| Shore D (DIN 53 505) | 56 |
| G'-Modul (DIN 53 445)   −30 °C | 551 MPa |
|                        +20 °C | 210 MPa |
|                        +65 °C | 111 MPa |
| Biegemodul (ASTM-D 790–71) | 877 MPa |

**Beispiel 2**

Beispiel 1 wird wiederholt mit der einzigen Ausnahme, daß die Menge des in die Form eingetragenen Reaktionsgemisches so bemessen wird, daß eine Rohdichte von lediglich 870 kg/m³ resultiert. Weiter charakteristische Werte des erhaltenen Formteils sind:

| | |
|---|---|
| Zugfestigkeit (DIN 53 504) | 23 MPa |
| Bruchdehnung (DIN 53 504) | 270% |
| Weiterreißfestigkeit (DIN 53 515) | |
| mit Schnitt | 59 kN/m |
| Shore D (DIN 53 505) | 48 |
| G'-Modul (DIN 53 445)   −30 °C | 359 MPa |
|                        +20 °C | 133 MPa |
|                        +65 °C | 72 MPa |
| Biegemodul (ASTM-d 790–71) | 626 MPa |

**Beispiel 3 (Vergleich)**

77,00 Gew.-Teile eines Polyethers der OH-Zahl 28, der durch Addition von Propylenoxid und anschließende Addition von Ethylenoxid an Trimethylolpropan erhalten wurde (ca. 80% prim. OH-Gruppen), 23,00 Gew.-Teile einer Mischung aus 65 Gew.-Teilen
1-Methyl-3,5-diethyl-phenyldiamin-(2,4)
und 35 Teilen
1-Methyl-3,5-diethyl-phenyldiamin-(2,6),
sowie 0,15 Gew.-Teile Dibutylzinndilaurat werden vereinigt und mit 57 Gew.-Teilen einer Isocyanatkomponente (24,5 Gew.-% NCO), hergestellt aus technischem
4,4'-Diphenylmethan-diisocyanat
(32 Gew.-% NCO) und einem Polypropylenglykol der OH-Zahl 480, nach dem RSG-Verfahren verarbeitet. Die Temperatur der Rohstoffe beträgt 40 °C. Die Formstandzeit beträgt 2 Minuten.

| | |
|---|---|
| Rohdichte (DIN 53 420) | 1110 kg/m³ |
| Zugfestigkeit (DIN 53 504) | 20 MPa |
| Bruchdehnung (DIN 53504) | 220% |
| Biegemodul (ASTM-D 790–71) | 330 MPa |
| Shore D (DIN 53 505) | 65 |

**Beispiel 4**

Aminopolyether A wird durch Reaktion mit Kohlendioxid so modifiziert, daß die gegenüber Isocyanatgruppen reaktionsfähigen Gruppen zu 77 Äquivalentprozent aus Ammoniumcarbamatgruppen bestehen. 10 Gew.-Teile des so modifizierten Polyethers, 67 Gew.-Teile eines Polyethers der OH-Zahl 28, der durch Addition von Propylenoxid und anschließende Addition von Ethylenoxid an Trimethylolpropan erhalten wurde (ca. 80% prim. OH-Gruppen), 23 Gew.-Teile einer Mischung aus 65 Gew.-Teilen
1-Methyl-3,5-diethyl-phenyldiamin-(2,4)
und 35 Teilen
1-Methyl-3,5-diethyl-phenylendiamin-(2,6),
sowie 0,15 Gew.-Teile Dibutylzinndilaurat werden vereinigt und mit 57 Gew.-Teilen einer Isocyanatkomponente (24,5 Gew.% NCO), hergestellt aus technischem
4,4'-Diphenyl-methan-diisocyanat
(32 Gew.-% NCO) und einem Polypropylenglykol der OH-Zahl 480, nach dem RSG-Verfahren verarbeitet. Die Temperatur der Rohstoffe beträgt 40 °C. Die Formstandzeit beträgt 2 Minuten.

| | |
|---|---|
| Rohdichte (DIN 53 420) | 1040 kg/m³ |
| Zugfestigkeit (DIN 53 504) | 21 MPa |
| Bruchdehnung (DIN 53 504) | 185% |
| Biegemodul (ASTM-D 790–71) | 360 MPa |
| Shore D (DIN 53 505) | 60. |

**Beispiel 5**

Aminopolyether A wird durch Reaktion mit Kohlendioxid so modifiziert, daß die gegenüber Isocyanatgruppen reaktionsfähigen Gruppen zu 77 Äquivalentprozent aus Ammoniumcarbamatgruppen bestehen. 20 Gew.-Teile des so modifizierten Polyethers, 75 Gew.-Teile eines Polyethers der OH-Zahl 28, der durch Addition von Propylenoxid und anschließende Addition von Ethylenoxid an Trimethylolpropan erhalten wurde (ca. 80% prim. OH-Gruppen), 23 Gew.-Teile einer Mischung aus 65 Gew.-Teilen
1-Methyl-3,5-diethyl-phenylendiamin-(2,4) und 35 Teilen
1-Methyl-3,5-diethyl-phenylendiamin-(2,6),
sowie 0,15 Gew.-Teile Dibutylzinndilaurat werden vereinigt und mit 57 Gew.-Teilen einer Isocyanatkomponente (24,5 Gew.-% NCO), hergestellt aus technischem
4,4'-Diphenyl-methan-diisocyanat
(32 Gew.-% NCO) und einem Polypropylenglykol der OH-Zahl 480, nach dem RSG-Verfahren verarbeitet. Die Temperatur der Rohstoffe beträgt 40 °C. Die Formstandzeit beträgt 2 Minuten.

| | |
|---|---|
| Rohdichte (DIN 53 420) | 760 kg/m$^3$ |
| Zugfestigkeit (DIN 53 504) | 12,3 MPa |
| Bruchdehnung (DIN 53 504) | 160% |
| Biegemodul (ASTM-D 790–71) | 240 MPa |
| Shore D (DIN 53 505) | 49. |

**Beispiel 6**

Aminopolyether A wird durch Reaktion mit Kohlendioxid so modifiziert, daß die gegenüber Isocyanatgruppen reaktionsfähigen Gruppen zu 77 Äquivalentprozent aus Ammoniumcarbamatgruppen bestehen. 30 Gew.-Teile des so modifizierten Polyethers, 47 Gew.-Teile eines Polyethers der OH-Zahl 28, der durch Addition von Propylendioxid und anschließende Addition von Ethylenoxid an Trimethylolpropan erhalten wurde (ca. 80% prim. OH-Gruppen), 23 Gew.-Teile einer Mischung aus 65 Gew.-Teilen
1-Methyl-3,5-diethyl-phenylendiamin-(2,4)
und 35 Teilen
1-Methyl-3,5-diethyl-phenylendiamin-(2,6),
sowie 0,15 Gew.-Teile Dibutylzinndilaurat werden vereinigt und mit 57 Gew.-Teilen einer Isocyanatkomponente (24,5 Gew.-% NCO), hergestellt aus technischem
4,4'-Diphenyl-methan-diisocyanat
(32 Gew.-% NCO) und einem Polypropylenglykolether der OH-Zahl 480, nach dem RSG-Verfahren verarbeitet. Die Temperatur der Rohstoffe beträgt 40 °C. Die Formstandzeit beträgt 3 Minuten.

| | |
|---|---|
| Rohdichte (DIN 53 420) | 580 kg/m$^3$ |
| Zugfestigkeit (DIN 53 504) | 7,1 MPa |
| Bruchdehnung (DIN 53 504) | 110% |
| Biegemodul (ASTM-D 790–71) | 180 MPa |
| Shore D (DIN 53 505) | 40. |

Die Beispiele 3 und 4 zeigen, daß durch leichtes Anschäumen (Vergleich Beispiel 3 mit 4) der Biegemodul erhöht werden kann. Die Beispiele 5 und 6 zeigen, daß durch die erfindungsgemäßen Verbindungen auch bei Einsatz von Teilmengen eines Carbamatgruppen enthaltenden Polyethers eine deutliche Reduzierung der Rohdichte auftritt.

**Beispiel 7**

Aminopolyether A wird durch Reaktion mit Kohlendioxid so modifiziert, daß die gegenüber Isocyanatgruppen reaktionsfähigen Gruppen zu 77 Äquivalentprozent aus Ammoniumcarbamatgruppen bestehen. 40 Gew.-Teile des so modifizierten Polyethers werden mit 50 Gew.-Teilen einer tetrafunktionellen Verbindung der OH-Zahl 790, hergestellt durch Propoxylierung von Ethylendiamin, 10 Gew.-Teilen einer Mischung aus 65 Gew.-Teilen
1-Methyl-3,5-diethyl-phenylendiamin-(2,4) und 35 Gew.-Teilen
1-Methyl-3,5-diethyl-phenylendiamin-(2,6)
und 6 Gew.-Teilen des stöchiometrischen Tallölfettsäuresalzes aus einem Mol Tallölfettsäure und einem Mol Amidamin, hergestellt aus einem Mol 3-Dimethylamino-propylamin-1 und einem Mol Tallölfettsäure, vereinigt und mit 145 Gew.-Teilen einer Isocyanatkomponente (24,5 Gew.-% NCO), hergestellt aus einem Polyisocyanatgemisch der Diphenylmethan-Reihe (32 Gew.-% NCO) der Viskosität 50 mPa (25 °C) und einem Polypropylenglykol der OH-Zahl 480, nach dem RSG-Verfahren verarbeitet. Die Temperatur der Rohstoffe beträgt 40 °C. Die Formstandzeit beträgt 3 Minuten.

Der PUR-Formteil hat eine Rohdichte (DIN 53 420) von 840 kg/m$^3$. Weitere charakteristische Daten sind:

| | |
|---|---|
| Biegemodul (ASTM-D 790–71) | 1400 MPa |
| Shore D (DIN 53 505) | 77 |
| Schlagzähigkeit (DIN 54 432) | 18 kJ/m$^2$. |

**Beispiel 8**

Beispiel 7 wird wiederholt mit der einzigen Ausnahme, daß die Menge des in die Form eingetragenen Reaktionsgemisches so bemessen wird, daß eine Rohdichte von lediglich 590 kg/m$^3$ resultiert. Weitere charakteristische Werte des Formteils sind:

| | |
|---|---|
| Biegemodul (ASTM-D 790–71) | 880 MPa |
| Shore D (DIN 53 505) | 65 |
| Schlagzähigkeit (DIN 53 432) | 11 kJ/m$^2$. |

**Beispiel 9 (Vergleich)**

95 Gew.-Teile eines Polyethers der OH-Zahl 28, der durch Addition von Propylenoxid und anschließende Addition von Ethylenoxid an Trimethylolpropan erhalten wurde (ca. 80% prim. OH-Gruppen), 5 Gew.-Teile Ethylenglykol, 0,4 Gew.-Teile Wasser, 0,35 Gew.-Teile Diazobicyclo [2,2,2] octan, 0,5 Gew.-Teile Tetramethylethylendiamin und 6 Gew.-Teile Trichlorfluormethan werden vereinigt und mit 28 Gew.-Teilen eines Polyisocyanat-Gemischs, bestehend aus 10 Gew.-% 2,4'-Diphenylmethan-diisocyanat, 75 Gew.-% 4,4'-Diphenylmethandiisocyanat und 15 Gew.-% Polyphenylpolymethylen-Polyisocyanat, vermischt.

Das auf 40 °C vorerwärmte Reaktionsgemisch wird in die oben genannte geschlossene Form gegossen. Man erhält einen Formschaum mit integraler Haut mit folgenden charakteristischen Eigenschaften:

| | |
|---|---|
| Rohdichte (DIN 53 420) | 130 kg/m$^3$ |
| Zugfestigkeit (DIN 53 571) | 160 kPa |
| Bruchdehnung (DIN 53 571) | 120% |
| Stauchhärte (DIN 53 577) | 16 kPa. |

In der Integralhaut sind Schlieren festzustellen, ferner tritt eine Markierung der Einfüllhöhe auf, die sich durch die Liegezeit erklären läßt.

**Beispiel 10**

Aminopolyether A wird durch Reaktion mit Kohlendioxid so modifiziert, daß die gegenüber Isocyanatgruppen reaktionsfähigen Gruppen zu 77 Äquivalentprozent aus Ammoniumcarbamatgruppen bestehen. 10 Gew.-Teile des so modifizierten Polyethers, 85 Gew.-Teile eines Polyethers der OH-Zahl 28, der durch Addition von Propylendioxid und anschließende Addition von Ethylenoxid an Trimethylolpropan erhalten wurde (ca. 80% prim. OH-Gruppen), 5 Gew.-Teile Ethylenglykol, 0,4 Gew.-Teile Wasser, 0,35 Gew.-Teile Diazabicyclo [2,2,2]octan, 0,5 Gew.-Teile Tetramethylethylendiamin und 6 Gew.-Teile Trichlorfluormethan werden vereinigt und mit 28 Gew.-Teilen eines Polyisocyanat-Gemischs, bestehend aus 10 Gew.-% 2,4'-Diphenylmethan-diisocyanat, 75 Gew.-% 4,4'-Diphenylmethandiisocyanat und 15 Gew.-% Polyphenylpolymethylen-Polyisocyanat vermischt.

Das auf 40 °C vorerwärmte Reaktionsgemisch wird in die oben genannte geschlossene Form gegossen. Das Gemisch schäumt sofort auf. Es treten weder Schlieren noch eine Markierung der Liegezone auf. Das Formteil ist optisch eindeutig besser als das aus Beispiel 9.

Beispiel 11

Aminopolyether A wird durch Reaktion mit Kohlendioxid so modifiziert, daß die gegenüber Isocyanatgruppen reaktionsfähigen Gruppen zu 77 Äquivalentprozent aus Ammoniumcarbamatgruppen bestehen.

2 Gew.-Teile des so modifizierten Polyethers, 90 Gew.-Teile eines Polyesters der OH-Zahl 56 aus Adipinsäure, Butandiol-1,4 und Ethylenglykol, 15 Gew.-Teile Butandiol-1,4, 0,4 Gew.-Teile Wasser und 0,5 Gew.-Teile 1,4-Diazabicyclo-(2,2,2)-octan werden zusammengegeben und mit 94 Gew.-Teilen eines NCO-Prepolymers des NCO-Gehaltes 19% aus 4,4'-Diphenylmethandiisocyanat und einem Polyester der OH-Zahl 56 aus Adipinsäure, Butandiol-1,4 und Ethylenglykol verarbeitet.

Die Verarbeitung erfolgt wie in den vorhergehenden Beispielen. Die Materialtemperaturen betragen 40 °C. Die Formstandzeit beträgt 3 Minuten. Mechanische Daten:

| | |
|---|---|
| Rohdichte (DIN 53 420) | 560 kg/m$^3$ |
| Shore A (DIN 53 505) | 62 |
| Zugfestigkeit (DIN 53 504) | 10 MPa |
| Bruchdehnung (DIN 53 504) | 480% |
| Weiterreißfestigkeit (DIN 53 507) | 15 kN/m. |

Beispiel 12

Aminopolyether A wird durch Reaktion mit Kohlendioxid so modifiziert, daß die gegenüber Isocyanatgruppen reaktionsfähigen Gruppen zu 77 Äquivalentprozent aus Ammoniumcarbamatgruppen bestehen. 10 Gew.-Teile des so modifizierten Polyethers, 80 Gew.-Teile eines Polyethers der OH-Zahl 28, der durch Addition von Propylenoxid und anschließend von Ethylenoxid an Propandiol-1,2 erhalten wurde, 20 Gew.-Teile eines Polyethers der OH-Zahl 28, der durch Addition von Propylenoxid und anschließend Ethylenoxid an Trimethylolpropan erhalten wurde, 9 Gew.-Teile einer Mischung aus 65 Gew.-% 1-Methyl-3,5-diethylphenylendiamin-(2,4) und 35 Gew.-% 1-Methyl-3,5-diethylphenylendiamin-(2,6), 0,2 Gew.-Teile Diazabicyclo-(2,2,2)-octan, 0,15 Gew.-Teile Dibutylzinndilaurat und 10 Gew.-Teile Trichlorfluormethan werden zusammengegeben und mit 40 Gew.-Teilen eines NCO-Semiprepolymers mit dem NCO-Gehalt 23% aus 4,4'-Diphenylmethandiisocyanat und Tripropylenglykol verarbeitet.

Die Rohstoffe wurden wie im vorigen Beispiel verarbeitet, die Rohstofftemperaturen betrugen je 28 °C, die Formstandzeit 2 Minuten. Mechanische Daten:

| | |
|---|---|
| Rohdichte (DIN 53 420) | 750 kg/m$^3$ |
| Shore A (DIN 53 505) | 64 |
| Zugfestigkeit (DIN 53 504) | 6 MPa |
| Bruchdehnung (DIN 53 504) | 400% |
| Weiterreißfestigkeit (DIN 53 507) | 10 kN/m. |

Der Zusatz des Carbamats bewirkt in Beispiel 11 und 12 eine wesentliche Verbesserung der Oberfläche des Formteils, sodaß nach der Tauchlackierung keine Liegezonen zu erkennen sind.

Beispiel 13

Ein Aminopolyether des mittleren Molekulargewichts 5250, der durch Umsetzung des Additionsproduktes von Propylenoxid an Trimethylolpropan mit Ammoniak in Gegenwart von Raney-Nickel und Wasserstoff hergestellt worden war, und dessen gegenüber Isocyanatgruppen reaktionsfähige Endgruppen zu mehr als 99 Äquivalentprozent aus primären Aminogruppen und zu weniger als 1 Äquivalentprozent aus sekundären Hydroxylgruppen bestehen, wird durch Reaktion mit Kohlendioxid so modifiziert, daß die gegenüber Isocyanatgruppen reaktionsfähigen Gruppen zu 66 Äquivalentprozent aus Ammoniumcarbamatgruppen bestehen. 20 Gew.-Teile des so modifizierten Polyethers werden mit 57 Gew.-Teilen eines Polyethers der OH-Zahl 28, der durch Addition von Propylenoxid und anschließende Addition von Ethylenoxid an Trimethylolpropan erhalten wurden (ca. 80% prim. OH-Gruppen), 23 Gew.-Teilen einer Mischung aus 65 Gew.-Teilen 1-Methyl-3,5-diethyl-phenylendiamin-(2,4) und 35 Gew.-Teilen 1-Methyl-3,5-diethyl-phenylendiamin-(2,6) und 0,15 Gew.-Teilen Dibutylzinndilaurat vereinigt und mit 57 Gew.-Teilen einer Isocyanatkomponente (24,5 Gew.-% NCO), hergestellt aus technischem 4,4'-Diphenylmethan-diisocyanat (32 Gew.-% NCO) und einem Polypropylenglykolether der OH-Zahl 480, nach dem RSG-Verfahren verarbeitet. Die Temperatur der Rohstoffe beträgt 40 °C. Die Formstandzeit beträgt 2 Minuten.

| | |
|---|---|
| Rohdichte (DIN 53 420) | 1050 kg/m$^3$ |
| Zugfestigkeit (DIN 53 504) | 23 MPa |
| Bruchdehnung (DIN 53 504) | 200% |
| Biegemodul (ASTM-D 790–71) | 370 MPa |
| Shore D (DIN 53 505) | 57. |

**Patentansprüche**

1. Verfahren zur Herstellung von mikrozellularen oder geschäumten Formkörpern auf Polyharnstoff-Basis durch Umsetzung in geschlossenen Formen eines Reaktionsgemisches aus

a) einer Polyisocyanat-Komponente, bestehend aus mindestens einem Di- oder Polyisocyanat mit ausschließlich aromatisch gebundenen Isocyanatgruppen,

b) Verbindungen mit gegenüber Isocyanatgruppen reaktionsfähigen Gruppen, und

c) gegebenenfalls den in der Polyurethanchemie bekannten Hilfs- und Zusatzmitteln, wobei die Komponenten a) und b) als one-shot-System nach der Reaktionsspritzgußtechnik verarbeitet werden, dadurch gekennzeichnet, daß man als Komponente b) Gemische von

b1) mindestens drei aliphatische Ethergruppen sowie n aliphatisch gebundene, gegenüber Isocyanatgruppen reaktionsfähige Gruppen aufweisende Verbindungen, wobei n für eine ganze oder (im statistischen Mittel) gebrochene Zahl von 2 bis 4 steht,

(i) deren gegenüber Isocyanatgruppen reaktionsfähige Gruppen zu mindestens (100 : n) Prozent aliphatisch gebundene, primäre und/oder sekundäre Aminogruppen darstellen, die

(ii) ihrerseits zu mindestens 10% in Form von, im Sinne der Isocyanat-Additionsreaktion difunktionellen, Ammoniumcarbamatgruppen, wie sie durch Umsetzung von aliphatisch gebundenen, primären oder sekundären Aminogruppen mit Kohlendioxid entstehen, vorliegen, wobei

(iii) die unmodifizierten, Ethergruppen aufweisenden Verbindungen ein Molekulargewicht von 200 bis 10 000 aufweisen und wobei

(iv) die gegenüber Isocyanatgruppen reaktionsfähigen Gruppen, bezogen auf die Gesamtmenge aller Verbindungen b1) mit gegenüber Isocyanatgruppen reaktionsfähigen Gruppen, zu 0,2–100 Äquivalent-% Ammoniumcarbamatgruppen darstellen, gegebenenfalls

(b2) mindestens einer Ammoniumcarbamatfreien Verbindung des Molekulargewichtsbereichs 400–10 000 mit gegenüber Isocyanatgruppen reaktionsfähigen Gruppen, sowie

(b3) mindestens einem Ammoniumcarbamatfreien, im Sinne der Isocyanat-Polyadditionsreaktion mindestens difunktionellen Kettenverlängerungs- bzw. Vernetzungsmittel des Molekulargewichtsbereichs 60–400, ausgewählt aus der Gruppe bestehend aus

(i) Diaminen mit 2 primären und/oder sekundären aromatisch gebundenen Aminogruppen des Molekulargewichtsbereichs 108–400,

(ii) gegebenenfalls Ethergruppen und mindestens zwei gegenüber Isocyanatgruppen reaktionsfähige Gruppen aufweisenden Aminoalkoholen des Molekulargewichtsbereichs 61–400 und

(iii) aliphatischen Polyaminen mit mindestens 2 primären oder sekundären Aminogruppen des Molekulargewichtsbereichs 60–400 verwendet, wobei die Reaktionspartner in einem Gewichtsverhältnis von (b1) + b2)) : b3) von 1 : 1 bis 20 : 1 eingesetzt werden.

2. Verfahren gemäß Anspruch 1, dadurch gekennzeichnet, daß die Komponente b3) als weiteren Bestandteil (iv) gegebenenfalls Ethergruppen aufweisende, mindestens zweiwertige primäre oder sekundäre Alkohole des Molekulargewichtsbereichs 62–400 aufweist.

3. Verfahren gemäß Anspruch 1, dadurch gekennzeichnet, daß man als Komponente b3) diprimäre, aromatische Diamine verwendet, die in mindestens jeweils einer ortho-Stellung zu den Aminogruppen Ethyl-, n-Propyl und/oder iso-Propyl-Substituenten und gegebenenfalls in weiteren ortho-Stellungen zu den Aminogruppen Methylsubstituenten aufweisen.

4. Verfahren gemäß Ansprüchen 1–3, dadurch gekennzeichnet, daß man als Komponente c) innere Formtrennmittel mitverwendet.

5. Verfahren gemäß Ansprüchen 1–4, dadurch gekennzeichnet, daß man die Formkörper innerhalb einer Zeitspanne von 300 Sekunden nach Befüllen der Form entformt.

**Claims**

1. Process for the preparation of microcellular or foamed moulded bodies based on polyurea by the reaction inside closed moulds of a reaction mixture of

a) a polyisocyanate component consisting of at least one di- or polyisocyanate having exclusively aromatically bound isocyanate groups,

b) compounds containing isocyanate reactive groups and

c) optionally the auxiliary agents and additives conventionally used in polyurethane chemistry, components a) and b) being worked up as a one-shot system by the reaction injection moulding technique, characterised in that the substances used as component b) consist of mixtures of

b1) compounds containing at least three aliphatic ether groups and n aliphatically bound isocyanate reactive groups, n being an integer or (on statistical average) a fraction with a value of from 2 to 4,

(i) in which at least (100 : n) percent of the isocyanate reactive groups are aliphatically bound, primary and/or secondary amino groups,

(ii) at least 10% of which primary and/or secondary amino groups are in the form of ammonium carbamate groups which are difunctional in the isocyanate addition reaction, such as are obtained by the reaction of aliphatically bound primary or secondary amino groups with carbon dioxide,

(iii) the unmodified compounds containing ether groups having a molecular weight of from 200 to 10,000 and

(iv) from 0.2 to 100 equivalents-% of the isocyanate reactive groups, based on the total quantity of all compounds b1) containing isocyanate reactive groups, consisting of ammonium carbamate groups, optionally

(b2) at least one compound in the molecular weight range of from 400 to 10,000 which is free from ammonium carbamate and contains isocyanate reactive groups and

(b3) at least one chain lengthening or cross-linking agent in the molecular weight range of from 60–400 which is free from ammonium carbamates and is at least difunctional in the isocyanate polyaddition reaction, selected from the group comprising

(i) diamines in the molecular weight range of from 108–400 having two primary and/or secondary aromatically bound amino groups,

(ii) amino alcohols in the molecular weight range of from 61–400 containing at least two isocyanate reactive groups and optionally ether groups and

(iii) aliphatic polyamines in the molecular weight range of from 60–400 containing at least two primary or secondary amino groups, the reactants being used in a ratio by weight of (b1 + b2)) : b3) of from 1 : 1 to 20 : 1.

2. Process according to claim 1, characterised in that component b3) contains, as additional component (iv), primary or secondary alcohols in the molecular weight range of from 62 to 400 which are at least divalent and optionally contain ether groups.

3. Process according to claim 1, characterised in that the compounds used as component b3) are diprimary aromatic diamines each carrying ethyl, n-propyl and/or isopropyl substituents in at least one ortho-position to the amino groups and optionally carrying methyl substituents in other ortho-positions to the amino groups.

4. Process according to claims 1 to 3, characterised in that internal mould release agents are used as component c).

5. Process according to claims 1 to 4, characterised in that the moulded products are removed from the mould within a period of 300 seconds after filling of the mould.

**Revendications**

1. Procédé pour la fabrication de pièces moulées microcellulaires ou formées en mousse à base de polyurée par réaction dans un moule fermé d'un mélange réactionnel composé de

a) un composant polyisocyanaté consistant en au moins un di- ou polyisocyanate contenant des groupes isocyanate liés exclusivement à des radicaux aromatiques,

b) des composés contenant des groupes réactifs vis-à-vis des groupes isocyanate, et

c) éventuellement des adjuvants et additifs connus en chimie des polyuréthanes, les composants a) et b) étant traités comme système one-shot par la technique du moulage réactif par injection, caractérisé en ce que l'on emploie comme composant b) un mélange de

b1) composés comportant au moins trois groupes éther aliphatiques ainsi que n groupes liés à des radicaux aliphatiques, réactifs vis-à-vis des groupes isocyanate, n représentant un nombre entier ou (en moyenne statistique) fractionnaire de 2 à 4,

(i) dont les groupes réactifs vis-à-vis des groupes isocyanate consistent pour au moins (100 : n) pour cent en groupes amino primaires et/ou secondaires liés à des radicaux aliphatiques, qui

(ii) à leur tour se présentent pour au moins 10% sous forme de groupes carbamate d'ammonium bifonctionnels dans le sens de la réaction d'addition d'isocyanate, tels qu'on les obtient par réaction de groupes amino primaires ou secondaires, liés à des radicaux aliphatiques, avec du dioxyde de carbone,

(iii) les composés présentant des groupes éther non modifiés ayant un poids moléculaire de 200 à 10 000, tandis que

(iv) les groupes réactifs vis-à-vis des groupes isocyanate représentent, par rapport à la quantité totale de tous les composés b1) comportant des groupes réactifs vis-à-vis des groupes isocyanate, 0,2 à 100 équivalents % de groupes carbamate d'ammonium, éventuellement

b2) au moins un composé sans carbamate d'ammonium de poids moléculaire de 400 à 10 000 comportant des groupes réactifs vis-à-vis des groupes isocyanate, ainsi que

b3) au moins un agent d'allongement de chaîne ou de réticulation de poids moléculaire de 60 à 400, sans carbamate d'ammonium, au moins bifonctionnel dans le sens de la réaction de polyaddition d'isocyanate, choisi dans le groupe composé de

(i) diamines avec 2 groupes amino primaires et/ou secondaires liés à des radicaux aromatiques, de poids moléculaire de 108 à 400,

(ii) des alcools aminés comportant éventuellement des groupes éther et au moins deux groupes réactifs vis-à-vis des groupes isocyanate, de poids moléculaire de 61 à 400, et

(iii) des polyamines aliphatiques comportant au moins 2 groupes amino primaires ou secondaires, de poids moléculaire de 60 à 400, les partenaires réactionnels étant utilisés dans un rapport pondéral ((b1) + b2)) : b3) de 1 : 1 à 20 : 1.

2. Procédé selon la revendication 1, caractérisé en ce que les composants b3) comportent comme composants supplémentaires (iv) des alcools primaires ou secondaires au moins bivalents ou bifonctionnels de poids moléculaire de 62 à 400 comportant éventuellement des groupes éther.

3. Procédé selon la revendication 1, caractérisé en ce que l'on utilise comme composants b3) des diamines aromatiques diprimaires comportant chaque fois dans au moins une position ortho par rapport aux groupes amino, des substituants éthyle, n-propyle et/ou isopropyle et éventuellement dans d'autres positions ortho par rapport aux groupes amino des substituants méthyle.

4. Procédé selon les revendications 1–3, caractérisé en ce que l'on utilise comme composant c) supplémentaire un agent de démoulage interne.

5. Procédé selon les revendications 1–4, caractérisé en ce que l'on démoule la pièce moulée dans un laps de temps de 300 secondes après le remplissage du moule.